(19) Europäisches Patentamt
European Patent Office
Office européen des brevets

(11) **EP 4 625 349 A1**

(12) **EUROPEAN PATENT APPLICATION**

(43) Date of publication:
**01.10.2025 Bulletin 2025/40**

(51) International Patent Classification (IPC):
**G06V 10/44** (2022.01)    **G06V 10/764** (2022.01)
**G06V 10/774** (2022.01)

(21) Application number: **25165153.5**

(22) Date of filing: **20.03.2025**

(52) Cooperative Patent Classification (CPC):
**G06V 10/774; G06V 10/44; G06V 10/764;**
G06V 10/82; G06V 2201/12

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.03.2024 IN 202411023984**

(71) Applicant: **Airbus SAS**
**31700 Blagnac Cedex (FR)**

(72) Inventor: **CHANDRASHEKAR, Puneeth Bilagunda**
**Bristol, BS34 7PA (GB)**

(74) Representative: **Ribeiro, James Michael**
**Withers & Rogers LLP**
**2 London Bridge**
**London SE1 9RA (GB)**

(54) **TRAINING MACHINE LEARNING MODEL WITH PERIPHERAL IGNORE MASK**

(57)    A method of training a machine learning model to identify image features, the method comprising: a. providing training image data, the training image data comprising a plurality of pixels; b. assigning a groundtruth annotation to each pixel, wherein each groundtruth annotation relates to a respective one of the pixels and each groundtruth annotation indicates whether or not that the pixel corresponds with an image feature; c. providing an ignore mask comprising a set of ignore flags, wherein each ignore flag relates to a respective one of the pixels and each ignore flag provides an indication that the pixel should be ignored; d. for each pixel, receiving a prediction value from the machine learning model, wherein each prediction value provides an indication of a probability of the pixel corresponding with an image feature; e. for each pixel which has no ignore flag, determining a loss value based on the prediction value and groundtruth annotation for that pixel, and f. training the machine learning model on a basis of the loss value; and for each pixel which has an ignore flag, ignoring the prediction value for that pixel so that it is not used to train the machine learning model.

*FIG. 12*

**Description**

FIELD OF THE INVENTION

The present invention relates to a method of training a machine learning model to identify image features, such as dents or other surface defects. The invention also relates to a computer system and computer software configured to train a machine learning model, and to a computer system and a computer-implemented method for identifying an image feature.

BACKGROUND OF THE INVENTION

Object detection is a known method to localize objects within an image. Modern deep learning algorithms solve this problem by collecting huge amounts of images with desired objects in them. A human marks a bounding box around it. These boxes are called groundtruth boxes or annotations and these are the values that an algorithm converges to during the iterative learning process. The person who does the annotation is called an annotator.

A deep learning algorithm then tries to learn this through optimization techniques to converge to the exact values given by the annotator. The process of convergence to the annotated values happens over several iterations through a process called backpropagation and gradient descent. Gradient descent calculates the error between the model prediction and the ground truth and tries to minimize this error.

In the case of detecting a rigid object with a clear outline it may be easy for an annotator to know the boundary of an object. In the case of a feature within an object (such as a dent) this may be more difficult.

Due to the ambiguous nature of dents and the frames being fed randomly for annotation, annotators can sometimes annotate or skip the ambiguous dents depending on their individual preference. Where it is annotated, the machine learning model tries to learn it as a "yes" and where it is skipped, it tries to learn it as a "no". Due to this, the optimizer is also left in a contradictory and inconsistent situation to sometimes learn and sometimes not learn such patterns. Sometimes the ambiguous dents are so insignificant that if the machine learning model is forced to learn them, the machine learning model might end up detecting a lot of false positives making it very sensitive.

In the usual case, there is a specific class that the algorithm uses to distinguish and learn such false detections from the actual ones, called the background class. In the ambiguous case, the background class will be at odds with the dent class and cause inconsistencies.

When frames are annotated, they may be selected randomly from a video, due to which the annotator generally does not get the temporal sequence as a cue to locate the dent and mark the right bounding box. Since this is a manual process which is already tedious, providing the annotator with the temporal sequence for reference will cause the annotator more difficulty and not really solve the problem.

The annotation process may also require that the same frame be given to multiple annotators to have better consistency in the bounding box. This method was introduced to mostly reduce the errors committed due to lethargy and not solve the issues due to the ambiguity in not being able to decide the boundary. Voting techniques like these will still leave the box undecided, and consecutive frames can still be inconsistent.

Since the optimization process is blind to the knowledge of the real world and is only looking at converging to the ground truth boxes provided by the annotator, similar dents being annotated differently leave it in a confused state because it is forced to converge to different values for similar or the same patterns, which would create contradictions.

SUMMARY OF THE INVENTION

An aspect of the invention provides a method of training a machine learning model to identify image features, the method comprising: a. providing training image data, the training image data comprising a plurality of pixels; b. assigning a groundtruth annotation to each pixel, wherein each groundtruth annotation relates to a respective one of the pixels and each groundtruth annotation indicates whether or not that the pixel corresponds with an image feature; c. providing an ignore mask comprising a set of ignore flags, wherein each ignore flag relates to a respective one of the pixels and each ignore flag provides an indication that the pixel should be ignored; d. for each pixel, receiving a prediction value from the machine learning model, wherein each prediction value provides an indication of a probability of the pixel corresponding with an image feature; e. for each pixel which has no ignore flag, determining a loss value based on the prediction value and groundtruth annotation for that pixel, and f. training the machine learning model on a basis of the loss value; and for each pixel which has an ignore flag, ignoring the prediction value for that pixel so that it is not used to train the machine learning model.

Optionally c. comprises inspecting an object and generating the ignore mask on a basis of the inspection.

Optionally c. comprises providing receiving inputs from a manual inspection of an object and generating the ignore mask on a basis of the inputs.

Optionally c. comprises inspecting an object with a sensor to generate three-dimensional inspection data and generating the ignore mask on a basis of the three-dimensional inspection data.

Optionally the training image data comprises one or more images of the object.

Optionally the method further comprises generating the training image data by imaging the object.

Optionally the object is imaged with light.

Optionally the training image data comprises a series of images of the object which each contain the same feature viewed from a different viewing angle.

Optionally the method further comprises generating the training image data by imaging the object from a series of different viewing angles.

Optionally b. comprises displaying the training image data to a human annotator; and receiving a groundtruth mask via inputs from the human annotator, the groundtruth mask providing an indication that a region of the training image data contains an image feature.

Optionally d.-f. are repeated, each repeat comprising a respective training epoch.

Optionally the image feature comprises a surface defect.

Optionally the image feature comprises a surface defect of an aircraft.

Optionally the image feature comprises a dent.

Optionally the loss value is determined by the algorithm:

$$-y_k \ln p_k - (1 - y_k) \ln(1 - p_k).$$

wherein yk is a groundtruth annotation for that pixel; pk is a prediction value for that pixel, a pixel which corresponds with an image feature has a groundtruth annotation yk of 1, and a pixel which does not correspond with an image feature has a groundtruth annotation yk of 0.

Optionally after the machine learning model has been trained, it is used to segment an image in an inference phase.

Optionally c. comprises creating the ignore mask on a basis of the groundtruth mask, wherein the ignore mask comprises a loop at a periphery of the groundtruth mask, the loop having an inner edge and an outer edge.

A further aspect of the invention provides a computer system configured to train a machine learning model by the method of the preceding aspect.

A further aspect of the invention provides computer software configured to train a machine learning model by the method of the preceding aspect.

A further aspect of the invention provides a method of training a machine learning model to identify image features, the method comprising: a. providing training image data, the training image data comprising a plurality of pixels; b. providing a groundtruth mask which provides an indication that a region of the training image data contains an image feature; c. creating one or more ignore masks on a basis of the groundtruth mask, each ignore mask comprising a loop at a periphery of the groundtruth mask, the loop having an inner edge and an outer edge; d. for each pixel, receiving a prediction value from the machine learning model, wherein each prediction value provides an indication of a probability of the pixel corresponding with an image feature; e. for each pixel which coincides with the groundtruth mask and does not coincide with an ignore mask, determining a loss value based on the prediction value for that pixel and training the machine learning model on a basis of the loss value; and f. for each pixel which lies between the inner and outer edges of an ignore mask, ignoring the prediction value for that pixel so that it is not used to train the machine learning model.

Optionally the periphery of the groundtruth mask comprises a margin area extending to an edge; and all or part of an ignore mask is inside the edge so that it overlaps with the margin area of the ground truth mask.

Optionally the periphery of the groundtruth mask comprises a margin area extending to an edge of the groundtruth mask; and all or part of an ignore mask is outside the edge of the groundtruth mask so that it does not overlap with the ground truth mask.

Optionally the periphery of the groundtruth mask comprises a margin area extending to an edge of the groundtruth mask; a first part of an ignore mask is inside the edge of the groundtruth mask so that it overlaps with the margin area; and a second part of the ignore mask is outside the edge of the groundtruth mask so that it does not overlap with the ground truth mask.

Optionally the ignore mask is created on a basis of the groundtruth mask by dilation of a line following the edge of the groundtruth mask.

Optionally each ignore mask is created on a basis of the groundtruth mask by analysing the groundtruth mask by an automated edge detection process to detect an edge of the groundtruth mask; and creating the ignore mask so that it has the same shape as the edge of the groundtruth mask.

Optionally the periphery of the groundtruth mask comprises a margin area extending to an edge of the groundtruth mask; and the inner and outer edges of the ignore mask each have the same shape as the edge of the groundtruth mask.

Optionally for each ignore mask a radial distance between the inner and outer edges of the ignore mask does not vary around the ignore mask.

Optionally the method further comprises assigning a groundtruth annotation to each pixel, wherein each groundtruth annotation relates to a respective one of the pixels and each groundtruth annotation indicates whether or not that the pixel corresponds with an image feature; and for each pixel which does not coincide with an ignore mask, a loss value is determined based on the prediction value and groundtruth annotation for that pixel.

Optionally the loss value is determined by the algorithm:

$$-y_k \ln p_k - (1 - y_k) \ln(1 - p_k).$$

wherein yk is the groundtruth annotation for that pixel; pk is the prediction value for that pixel, a pixel which corresponds with an image feature has a groundtruth annotation yk of 1, and a pixel which does not correspond with an image feature has a groundtruth annotation yk of 0.

Optionally the training image data comprises a series of images of an object which each contain the same feature viewed from a different viewing angle.

Optionally the method further comprises generating the training image data by imaging the object from a series of different viewing angles.

Optionally the object is imaged with light.

Optionally b. comprises displaying the training image data to a human annotator and receiving the groundtruth mask via inputs from the human annotator.

Optionally d.-f. are repeated, each repeat comprising a respective training epoch.

Optionally the image feature comprises a surface defect.

Optionally the image feature comprises a surface defect of an aircraft.

Optionally the image feature comprises a dent.

Optionally after the machine learning model has been trained, it is used to segment an image in an inference phase.

A further aspect of the invention provides a computer system configured to train a machine learning model by the method of the preceding aspect.

A further aspect of the invention provides computer software configured to train a machine learning model by the method of the preceding aspect.

A further aspect of the invention provides a computer system configured to identify an image feature, said computer system comprising a machine learning model trained according to the method of the preceding aspect.

A further aspect of the invention provides a computer-implemented method of identifying an image feature comprising using a machine learning model trained according to the method of the preceding aspect to identify an image feature.

BRIEF DESCRIPTION OF THE DRAWINGS

Embodiments of the invention will now be described with reference to the accompanying drawings, in which:

Figure 1 shows a computer system;

Figure 2 shows an aircraft being scanned by a camera to generate training image data;

Figure 3 shows a training phase in which the machine learning model is trained by a training engine;

Figure 4 is a flow diagram showing various steps of the training phase;

Figure 5 shows a temporal sequence of training images;

Figure 6 shows the generation of groundtruth masks;

Figure 7 shows groundtruth masks on the frames of the training images;

Figure 8 shows groundtruth masks on the frames of the training images, along with regions with high prediction values;

Figure 9 shows a groundtruth mask;

Figure 10 shows a line following the outer edge of the groundtruth mask of Figure 9;

Figure 11 shows an ignore mask based on the groundtruth mask of Figure 9;

Figure 12 shows the ignore mask of Figure 11 and an associated region with high prediction values;

Figure 13 shows a further ignore mask based on the groundtruth mask of Figure 9;

Figure 14 shows a further ignore mask based on the groundtruth mask of Figure 9;

Figure 15 shows a manual method of generating ignore masks;

Figure 16 shows ignore masks on the frames of the training images of Figure 9;

Figure 17 shows an aircraft being scanned by a LIDAR sensor;

Figure 18 shows an automated method of generating ignore masks;

Figure 19 shows a pre-processed set of ignore masks; and

Figure 20 shows groundtruth masks on the frames of the training images, along with ignore masks and regions with high prediction values.

## DETAILED DESCRIPTION OF EMBODIMENT(S)

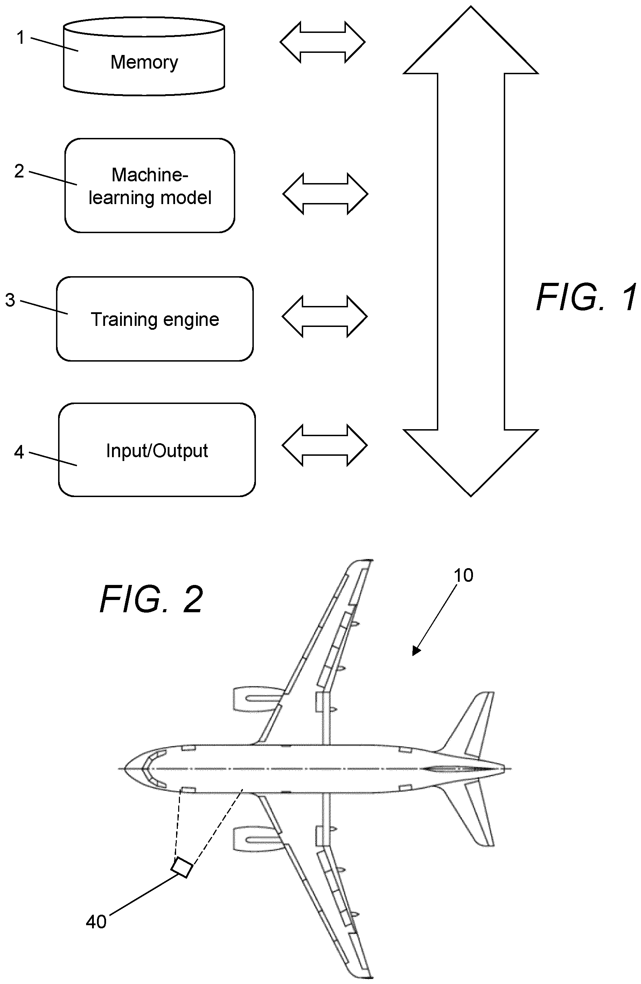

Figure 1 is a schematic view showing various elements of a computer system for identifying image features. The computer system comprises a memory 1, a machine learning model 2, a training engine 3, and various input/output devices 4.

The computer system comprises computer software configured to train the machine learning model 2 by the method described below.

In this example the machine learning model 2 is used to identify features within an object, for instance surface defects (such as dents or scratches) of an aircraft 10 shown in Figure 2. Aircraft are required to be inspected periodically, and the identification of surface defects can be part of such an inspection. Once a defect is identified automatically by the machine learning model 2, the defect can either be repaired or manually inspected.

Before being used to identify surface defects in an inference phase, the machine learning model 2 must be trained in a training phase. The training phase described below broadly involves a pre-training process of providing groundtruth masks and ignore masks; and a training process involving receiving a set of prediction values from the machine learning model 2 and training the machine learning model 2 accordingly.

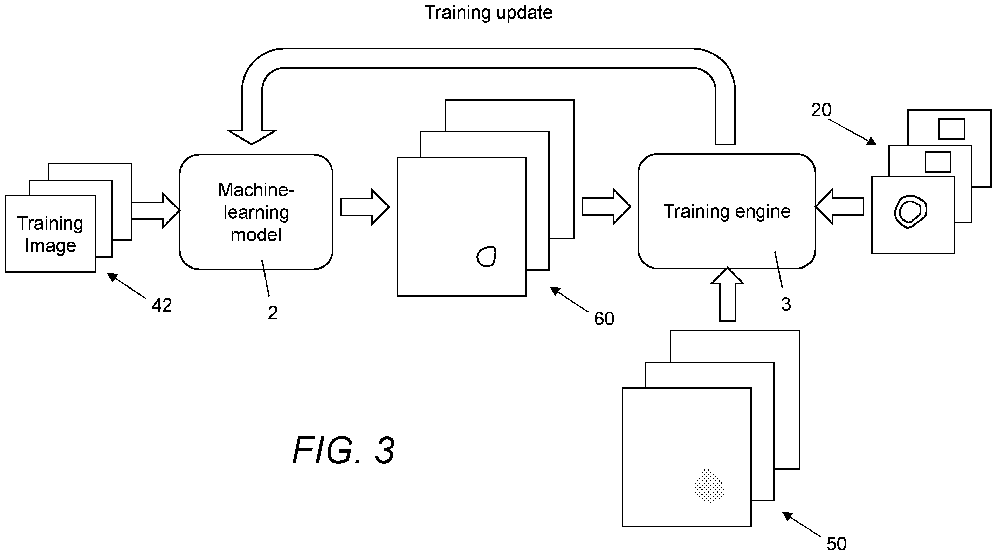

Figure 3 shows a method of training the machine learning model 2 by deep learning to identify image features, using the data described above. Training image data 42 is provided, and fed into the machine learning model 2. The training engine 3 receives a set 60 of prediction values output by the machine learning model 2, a set 50 of groundtruth masks, and a set 20 of ignore masks. The training phase comprises a series of training epochs. For each training epoch, the training engine 3 applies a training update which adjusts the weights in the neural network of the machine learning model 2.

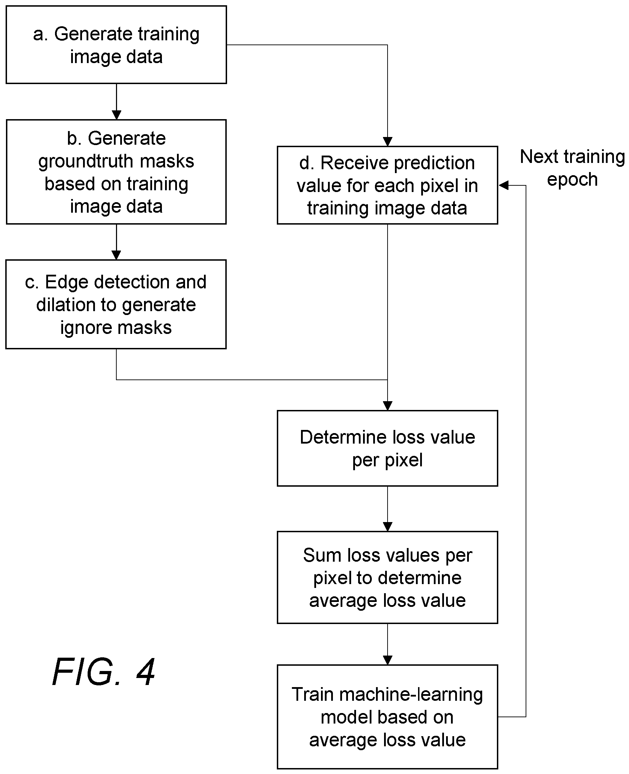

Figure 4 is a flow diagram showing various steps of the training phase, in which peripheral ignore masks are used to deal with ambiguous dent edges.

In a first step a., the training image data 42 is generated by imaging the aircraft 10 from a series of different viewing angles as shown in Figure 2. The aircraft 10 may be imaged with visible light by a camera 40 which scans the entire outer surface of the aircraft 10. By way of example, a video of the aircraft may be acquired as the camera 40 moves continuously around the aircraft. The camera 40 may be held on the end of a robot arm or carried by an airborne drone. The video therefore comprises a series of frames, each frame comprising a training image containing a respective part of the aircraft viewed from a different viewing angle. These training images collectively provide a complete set of training image data 42 shown in Figure 3. Each training image comprises a plurality of pixels.

In the example above, the camera 40 senses visible light, but in other examples the camera 40 may be replaced by an infrared camera (with an active source of infrared light), a thermal camera, or an ultrasound camera.

In the example above, the images are acquired from a single aircraft 10. In other examples, the complete set of training image data 42 may be acquired by imaging multiple aircraft, or by imaging multiple parts.

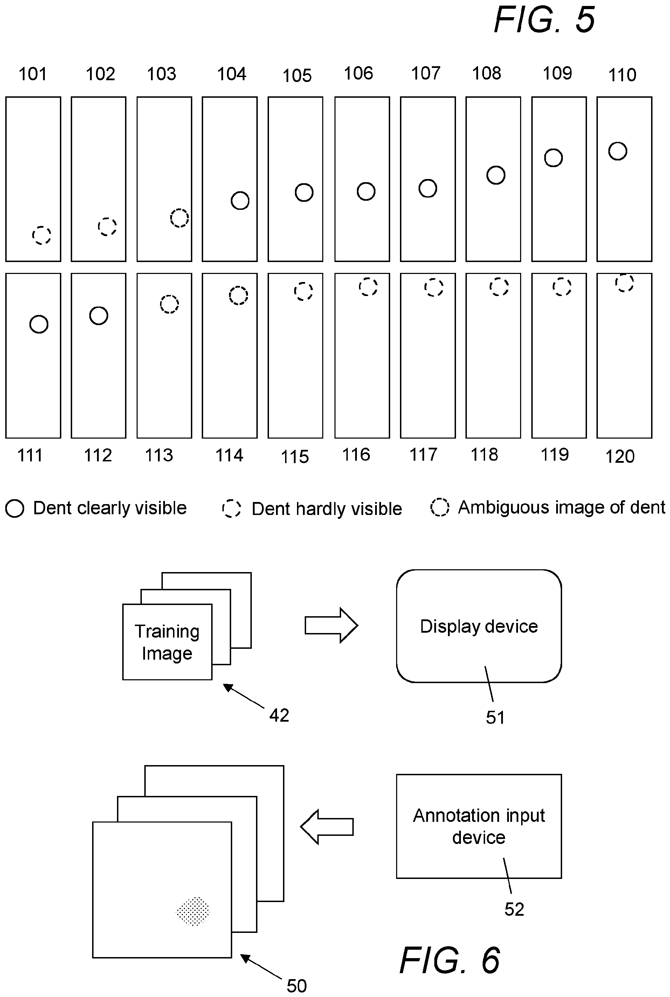

Any visible defect will be present in more than one training image, and each training mage may contain more than one defect. Here the term "visible defect" means a defect which is visible in the image and may (or may not) be visible on the aircraft 10. Figure 5 gives an example of a temporal series of twenty cropped training images 101-120 which each contain the same feature (in this case, a dent) viewed from a different viewing position or different viewing angle.

In the training images 104-112 the image of the dent is clearly visible. In the training images 101-102 and 115-120 the dent is hardly visible - for instance it may be obscured by glare, or less visible due to the viewing angle of the camera or angle of the light. In the training images 103, 113 and 114 the dent is visible but the image of the dent is ambiguous.

Note that only a single dent per frame is shown in each image 101-120, but multiple dents may be visible in each frame.

In step b. of Figure 4, the set 50 of groundtruth masks is provided. Each groundtruth mask provides an indication that a region of the training image data 42 contains an image feature (in this case a dent).

Each groundtruth mask may comprise a set of groundtruth annotations, one for each pixel within the region. Each groundtruth annotation relates to a respective one of the pixels and provides a binary indication or flag (value 1) that the pixel corresponds with an image feature. Alternatively each groundtruth mask may consist only of an indication of the edge(s) of a region containing an image feature, rather than a "pixel-by-pixel" set of groundtruth annotations.

As shown in Figure 6, the set 50 of groundtruth masks may be generated by displaying the training image data 42 to a human annotator via a display device 51 and receiving the groundtruth masks as inputs from the human annotator via an annotation input device 52. Each groundtruth mask may be created by marking a boundary of a feature in the training image data 42. For instance the annotator may mark an outer edge of the feature using a mouse, drawing tool or similar input device. The outer edge may be rectangular, or any other shape (including an irregular shape). Alternatively, the annotator may provide each groundtruth mask by "painting" over the feature in the training image using a digital painting tool, hence providing a "pixel-by-pixel" set of groundtruth annotations indicating a block of pixels associated with the feature.

If the annotator only marks the outer edge of the image feature, then optionally the interior of the image feature is "filled-in" with groundtruth annotations so each pixel within the interior of the groundtruth mask is assigned a groundtruth annotation of 1.

Any pixels which do not fall within a groundtruth mask are assigned a groundtruth annotation of 0. Hence each pixel in each image is assigned a groundtruth annotation $y_k$ of either 0 or 1.

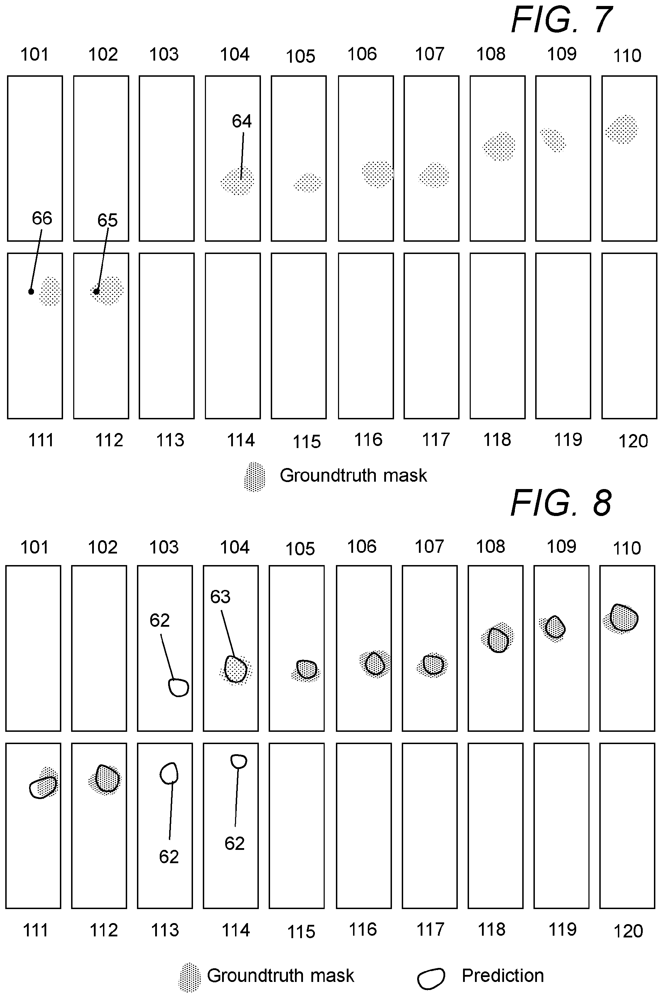

Figure 7 shows the frames of the twenty training images 101-120 with the images of the dents removed. The frames 104-112 where the image of the dent is clearly visible have been annotated with groundtruth masks 64 - in this case by "painting" over the feature in the training image using a digital painting tool, hence indicating a block of pixels associated with the feature.

Note that the human annotator is instructed to only generate a groundtruth mask if the feature is clearly visible. Hence no groundtruth masks have been generated for frames 101-103 or 113-120.

There may be 1000s of images to annotate, with the frames being presented randomly to different annotators. Hence frames with ambiguous images may be marked with groundtruth masks while others (like frames 103, 113 and 114) may not.

In step d. of Figure 4, for each pixel of each training image a prediction value $p_k$ is generated by the machine learning model 2. The machine learning model 2 comprises a neural network which identifies and classifies features in the training image data 42. For example a feature may be identified and classified as a dent.

Each prediction value output by the machine learning model 2 provides an indication of a probability of a pixel corresponding with an image feature (for example, a dent). Each prediction value is non-binary in the sense that it can take any decimal value $p_k$ between 0 and 1. In Figure 3 the output of the machine learning model 2 is indicated as a data set 60.

If the machine learning model 2 is 100% confident that a pixel should be classified as an image feature, then the prediction value output for that pixel is 1; and if the machine learning model 2 is 100% confident that a pixel should not be classified as an image feature, then the prediction value output for that pixel is 0. In most cases the prediction values will take an intermediate value between 0 and 1. For the training images 103-114, the machine learning model 2 predicts dents as regions with high prediction values. Edges of regions with high prediction values (~1) are indicated in Figure 8 in solid lines - some of these regions being numbered 62, 63.

Taking a simple image segmentation case by way of example with only two classes, each pixel may be classified as either a dent or as background. If the prediction value is high (for instance greater than 50%) then the pixel is classified as a dent; and if the prediction value is low (for instance less than 50%) then it is classified as background (or "not-dent").

The regions with high prediction values in the frames 104-112 all overlap with groundtruth masks 64: region 63 for example. The regions 62 in the frames 102, 113, 114 with high prediction values do not overlap with groundtruth masks 64. This is because the images 103, 113, 114 contain ambiguous images of a dent which are sufficiently visible to be detected by the machine learning model 2, but not sufficiently clear to be annotated with a groundtruth mask.

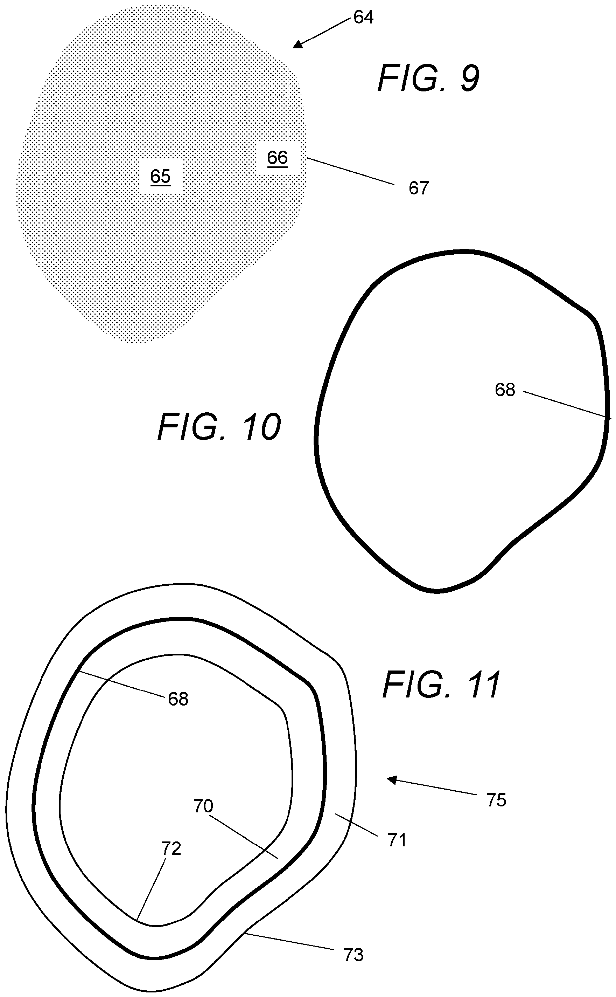

In step c. of Figure 4, the set 20 of ignore masks is generated. Figures 10-14 show three methods of creating an ignore mask on a basis of a groundtruth mask 64 shown in Figure 9. An ignore mask is generated for each of the groundtruth masks.

The groundtruth mask 64 shown in Figure 9 comprises a core 65 surrounded by an outer periphery 66, 67. The outer periphery comprises an outer margin area 66 extending to an outer edge 67 of the groundtruth mask 64. Each grountruth annotation within the groundtruth mask 64 is set to 1.

In this example the groundtruth mask 64 is created by a painting tool. An automated edge detection process analyses the groundtruth mask 64 to detect the outer edge 67 and generates a line 68 of pixels shown in Figure 10 which follows the detected outer edge. A peripheral ignore mask is then created with the same shape as the line 68 by one of the methods shown in Figures 11-14.

In all cases the ignore mask comprises a closed loop (i.e., a closed path whose initial point coincides with its terminal point) at the outer periphery 66, 67 of the groundtruth mask 64.

In the case of Figure 11, an ignore mask 75 is created on a basis of the groundtruth mask 64 by dilation of the line 68 both inwardly and outwardly. The ignore mask 75 has a first (inner) part 70 inside the outer edge 67 of the groundtruth mask so that it overlaps with the outer margin area 66; and a second (outer) part 71 outside the outer edge 67 of the groundtruth mask so that it does not overlap with the ground truth mask 64.

The radial distance between the inner and outer edges 72, 73 of the ignore mask 75 does not vary around the ignore mask 75, and can be chosen by design.

In an alternative embodiment, the radial distance between the inner and outer edges 72, 73 of the ignore mask 75 may vary around the ignore mask 75 is a predetermined way - for instance bigger at the top of the ignore mask than at the bottom.

The ignore mask 75 may comprise a set of ignore flags, each relating to a respective one of the pixels between the inner and outer edges 72, 73 of the ignore mask 75. Each ignore flag provides a binary indication that the pixel should be ignored. Each pixel which coincides with an ignore mask is given an ignore flag.

Alternatively the ignore mask 75 may consist only of an indication of the inner and outer edges 72, 73, rather than a "pixel-by-pixel" set of ignore flags. In this case, optionally the interior of the ignore mask 75 is "filled-in" with ignore flags so each pixel within the interior has an associated ignore flag.

Optionally a pre-processing step is performed so that for all pixels in the inner part 70 of the ignore mask 75 (where the groundtruth annotation and the ignore flag are both 1) the groundtruth annotation is set to 0.

Returning to Figures 3 and 4: once the groundtruth masks and ignore masks have been generated, the training engine 3 trains the machine learning model 2 in a series of training epochs.

For each pixel which has no ignore flag (i.e. it does not coincide with an ignore mask) the training engine 3 determines a loss value based on the prediction value and groundtruth annotation for that pixel. This generates a loss value per pixel, except where the pixel has an ignore flag.

By way of example, the loss value per pixel may be determined by a logistic regression function, such as the function:

$$-y_k \ln p_k - (1 - y_k) \ln(1 - p_k).$$

where $y_k$ is a groundtruth annotation and $p_k$ is a prediction value.

A pixel which corresponds with an image feature has a groundtruth annotation $y_k$ of 1, and a pixel which does not correspond with an image feature has a groundtruth annotation $y_k$ of 0. Hence yk can be 0 or 1, and pk can be any decimal value between 0 and 1. The loss value will be huge if the predicted value does not match with the groundtruth annotation, and low otherwise.

The machine learning model 2 is then trained on a basis of the loss values per pixel. For example, the loss values per pixel may be summed to determine a mean average loss value which is used to train the machine learning model 2.

For each pixel which has an ignore flag, the training engine 3 ignores the prediction value for that pixel so that it does not contribute to the calculation of the mean average loss value and hence is not used to train the machine learning model 2.

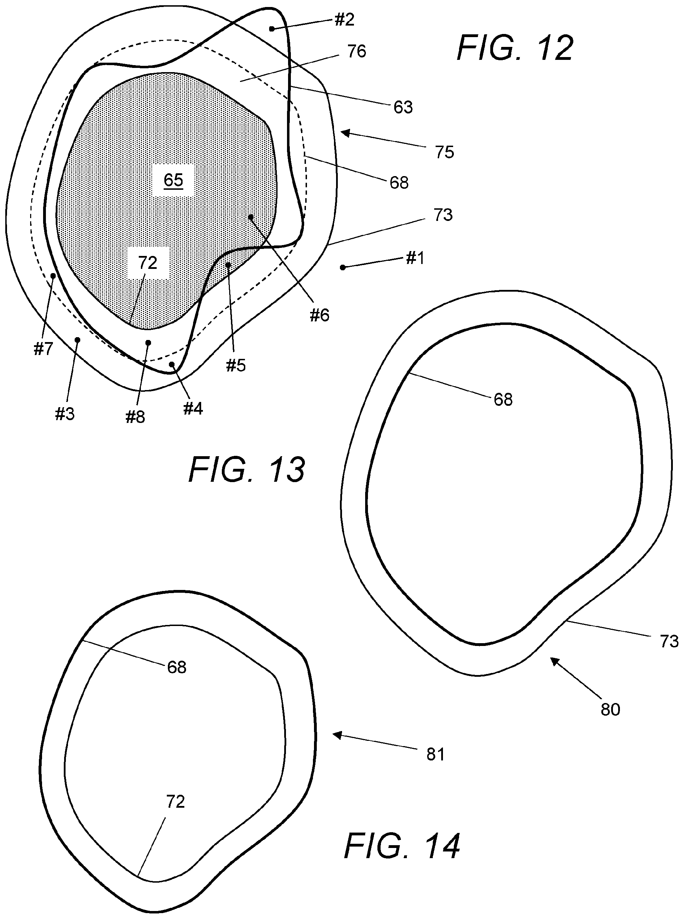

Figure 12 shows the outer edge of a region 63 with high prediction values (~1) which overlaps with the ignore mask 75. A loss value is determined for each pixel which coincides with the groundtruth mask 64 and also lies inside the inner edge 72 of the ignore mask 75 (so it does not coincide with an ignore mask).

Hence all of the pixels in the core 65 of the groundtruth mask are used to train the machine learning model 2. For each pixel which lies between the inner and outer edges 72, 73 of the ignore mask 75 (and hence coincides with the ignore mask75) the prediction value for that pixel is ignored so that it is not used to train the machine learning model 2. Hence pixels at an outer boundary 76 of the region 63 are ignored.

Figures 13 and 14 show alternative peripheral ignore masks 80, 81. Like the ignore mask 75, each ignore mask 80, 81 comprises a closed loop at the outer periphery 66, 67 of the groundtruth mask 64.

The ignore mask 80 of Figure 13 is created by dilation of the line 68 outwardly but not inwardly. In this case all of the ignore mask 80 lies outside the outer edge of the groundtruth mask 64, so that it does not overlap with the ground truth mask 64. The inner edge of the ignore mask 80 lies adjacent to the line 68.

The ignore mask 81 of Figure 14 is created by dilation of the line 68 inwardly but not outwardly. In this case all of the ignore mask 81 lies inside the outer edge of the groundtruth mask 64, so that it overlaps with the outer margin area 66 of the ground truth mask 64. The outer edge of the ignore mask 81 is the line 68.

Table 1 gives eight scenarios that we will be encountered at the pixel level, and the corresponding loss value.

Table 1

| Scenario | Groundtruth annotation | Prediction value | Ignore flag | Loss value |
|---|---|---|---|---|
| #1 | 0 | ~0 | 0 | Low |
| #2 | 0 | ~1 | 0 | High (false positive) |
| #3 | 0 | ~0 | 1 | Ignore |
| #4 | 0 | ~1 | 1 | Ignore |
| #5 | 1 | ~0 | 0 | High (false negative) |
| #6 | 1 | ~1 | 0 | Low |
| #7 | 1 | ~0 | 1 | Ignore |
| #8 | 1 | ~1 | 1 | Ignore |

For each pixel which has a groundtruth annotation of zero and no ignore flag (i.e. scenarios #1 and #2) a loss value is determined based on the prediction value and groundtruth annotation for that pixel, and the machine learning model 2 is trained on a basis of the loss value to learn this pixel as background. Figure 12 indicates pixels #1, #2 corresponding with scenarios #1 and #2 respectively.

For each pixel which has an ignore flag (i.e. it coincides with the ignore mask) and a groundtruth annotation of zero (i.e. scenarios #3 and #4) the training engine 3 ignores the prediction value for that pixel so that it is not used to train the machine learning model 2. Figure 12 indicates a pixel #3 corresponding with scenario #3 and a pixel #4 corresponding with scenario #4.

For each pixel which has a groundtruth annotation of 1 (i.e. it coincides with the groundtruth mask) and no ignore flag (i.e. scenarios #5 and #6) a loss value is determined based on the prediction value and groundtruth annotation for that pixel and the machine learning model 2 is trained on a basis of the loss value to learn the pixel as a dent. Figure 12 indicates pixels #5, #6 corresponding with scenarios #5 and #6 respectively. These pixels #5, #6 each overlap with the core 65 of the groundtruth mask and lie inside the inner edge 72 of the ignore mask (so they do not coincide with the ignore mask). Hence the pixels #5, #6 do not coincide with the ignore mask 75 and are not ignored.

Figure 12 indicates a pixel #7 corresponding with scenario #7 and a pixel #8 corresponding with scenario #8. Note that scenarios #7 and #8 will not occur if the pre-processing step mentioned above is performed, because the pre-processing step sets the groundtruth annotation to 0.

If the pre-processing step mentioned above is not performed, then the training engine 3 handles pixels #7 and #8 in the same way as pixels #3 and #4. Hence for each pixel which has an ignore flag and a groundtruth annotation of 1 (i.e. scenarios #7 and #8) the training engine 3 ignores the prediction value for that pixel so that it is not used to train the machine learning model 2.

Figure 7 shows two consecutive image frames 111, 112 which both contain an image of the same dent at about the same location, but where the groundtruth masks are quite different. This inconsistency may be caused by the groundtruth masks being created by different people for example. Alternatively, even if the same annotator generates the two groundtruth masks, that annotator may not be presented with the consecutive frames 111, 112 immediately one after the other and this can lead to inconsistency.

As a consequence, pixels 65, 66 at the same location at the edge of the dent are inside the groundtruth mask in one image 112, but outside the groundtruth mask in the adjacent image 111 of the temporal series.

This inconsistency could result in the machine learning model 2 being forced to classify the pixel 65 as a dent, and the pixel 66 as background. Such contradicting inputs can result in poor and inconsistent training. The peripheral ignore masks 75, 80, 81 described above may prevent such ambiguous pixels being used to train the machine learning model 2 and this improves the quality and consistency of training.

In the examples above, the groundtruth mask 64 of Figure 9 comprises a continuous core 65 surrounded by an outer periphery 66, 67. Hence the groundtruth mask 64 has an outer periphery 66, 67 but no inner periphery, so only a first (outer) peripheral ignore mask 75, 80, 81 is generated which follows the outer edge 67.

In other examples, the groundtruth mask may contain a hole so it also has an inner periphery with an inner edge. In such cases, a second (inner) peripheral ignore mask may also be generated, such an ignore mask comprising a loop at the inner periphery of the groundtruth mask, the loop having an inner edge and an outer edge.

The second (inner) peripheral ignore mask may be generated in the same way as the first (outer) peripheral ignore mask. That is, the second (inner) peripheral ignore mask may be created on a basis of the groundtruth mask by analysing the groundtruth mask by an automated edge detection process to detect an inner edge of the groundtruth mask; and creating the ignore mask so that it has the same shape as the inner edge of the groundtruth mask.

In such a case, pixels inside the inner edge of the loop will not coincide with the groundtruth mask (because they are located in the hole in the groundtruth mask). Such a second (inner) peripheral ignore mask can then be used in an identical way to the first (outer) ignore mask. In such a case, for each pixel which coincides with the groundtruth mask and does not coincide with an ignore mask (i.e. does not coincide with either the first or second peripheral ignore mask), a loss value is determined based on the prediction value for that pixel and the machine learning model is trained on a basis of the loss value; and for each pixel which lies between the inner and outer edges of an ignore mask (i.e. it coincides with either the first or second peripheral ignore mask), the prediction value for that pixel is ignored so that it is not used to train the machine learning model.

In the temporal series of Figure 5 the images of the dents are faded to start with, become prominent, and then fade out again. This is a continuous process and there is no hard line between the dent and no dent case. Due to its robustness, the machine learning model 2 will start to detect dents in the ambiguous images 103, 113, 114 - see regions 62 in Figure 8. Since the machine learning model 2 does not have an intermediate class, it considers any pixel to either fall into a dent class or a non-dent class. Since the frames 103, 113, 114 with ambiguous images are not annotated with groundtruth masks, the machine learning model 2 may try to "unlearn" the regions 62 as dents and this may affect the detection of dents in other images. This inconsistency can cause contradictory conditions for the machine learning algorithm.

For the training images 101-102 and 115-120 where the dent is hardly visible, it is undesirable to force the machine learning model 2 to learn the region of the dent as background just because the visibility is low, since these are regions where physically the dents exist.

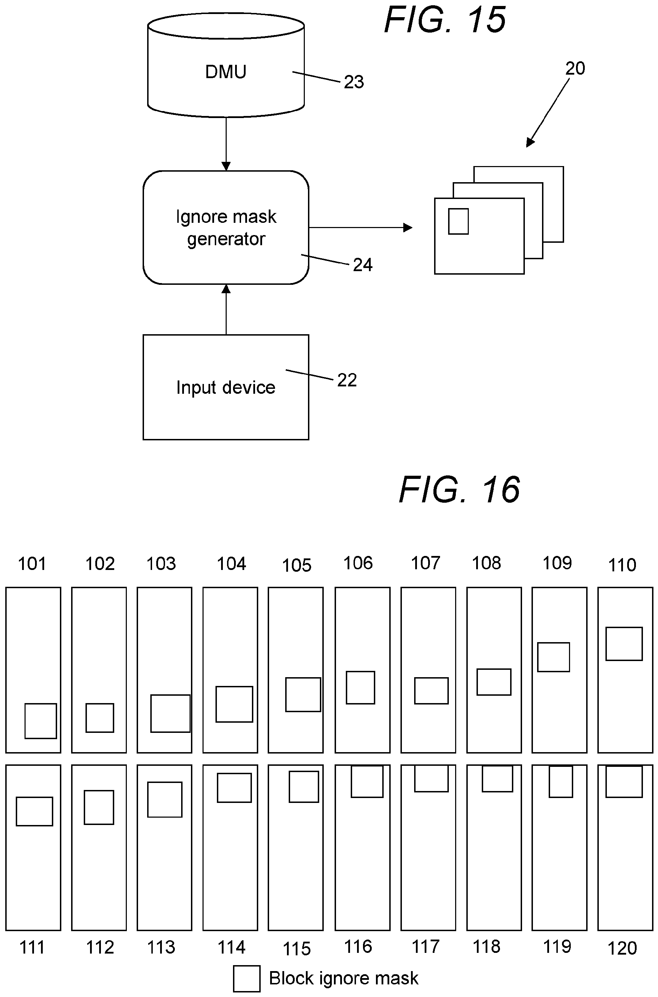

Figures 15-20 show a method of training the machine learning model 2 to identify image features, which uses block ignore masks to deal with such problems. The process of Figures 15-20 uses the training method of Figure 3, except that the block ignore masks are not based on the set 50 of groundtruth masks.

The term "block" ignore masks is used to refer to an ignore mask with an outer edge but no inner edge, in contrast to the "peripheral" ignore masks described above which are loops with both inner and outer edges.

Figure 15 shows a manual process for generating a set 20 of block ignore masks. Each block ignore mask is generated by receiving inputs from a manual inspection of the aircraft 10 via an input device 22. That is, a human inspector visually inspects the aircraft 10, and inputs the locations of any visible defects into the input device. A digital mock-up (DMU) 23 of the aircraft 10 provides a 3D representation of the aircraft 10. An ignore mask generator 24 (which may be part of the computer system of Figure 1, or another computer system) receives the inputs from the input device 22, superimposes them onto the DMU 23, and generates the set 20 of block ignore masks accordingly. Each block ignore mask may comprise an outer boundary of a defect, such as a rectangular bounding box, or any other shape (regular or irregular) which surrounds a defect. Alternatively each block ignore mask may comprise a collection of pixels which are each associated with a defect, that is they lie within the boundary of a defect.

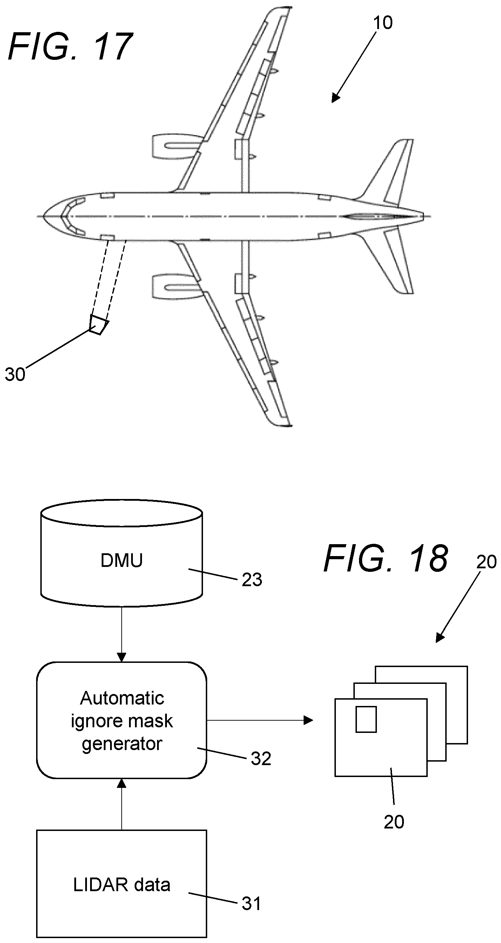

Figures 17 and 18 show an alternative automatic process for generating the set 20 of block ignore masks. In this case the ignore masks are provided by inspecting the aircraft with a sensor 30 (such as LIDAR sensor) to generate three-dimensional inspection data 31 (such as LIDAR data) and generating the ignore masks on a basis of the inspection data 31. The ignore masks are generated automatically by an automatic ignore mask generator 32 (which may be part of the computer system of Figure 1, or another computer system) based on the inspection data 31 and the DMU 23. As in Figure 15, each block ignore mask may comprise an outer boundary of a defect, such as a rectangular bounding box, or any other shape (regular or irregular) which surrounds a defect. Alternatively each block ignore mask may comprise a collection of pixels which are each associated with a defect, that is they lie within the boundary of a defect.

Figure 16 shows the frames 101-120 with block ignore masks created by one of the methods described above.

Each block ignore mask in Figure 16 may comprise a set of ignore flags, each relating to a respective one of the pixels inside the outer edge of the ignore mask. Each ignore flag provides a binary indication that the pixel should be ignored.

Alternatively each block ignore mask may consist only of an indication of the rectangular outer edge, rather than a "pixel-by-pixel" set of ignore flags. In this case, optionally the interior of the block ignore mask may be "filled-in" with ignore flags so each pixel within the interior has an associated ignore flag.

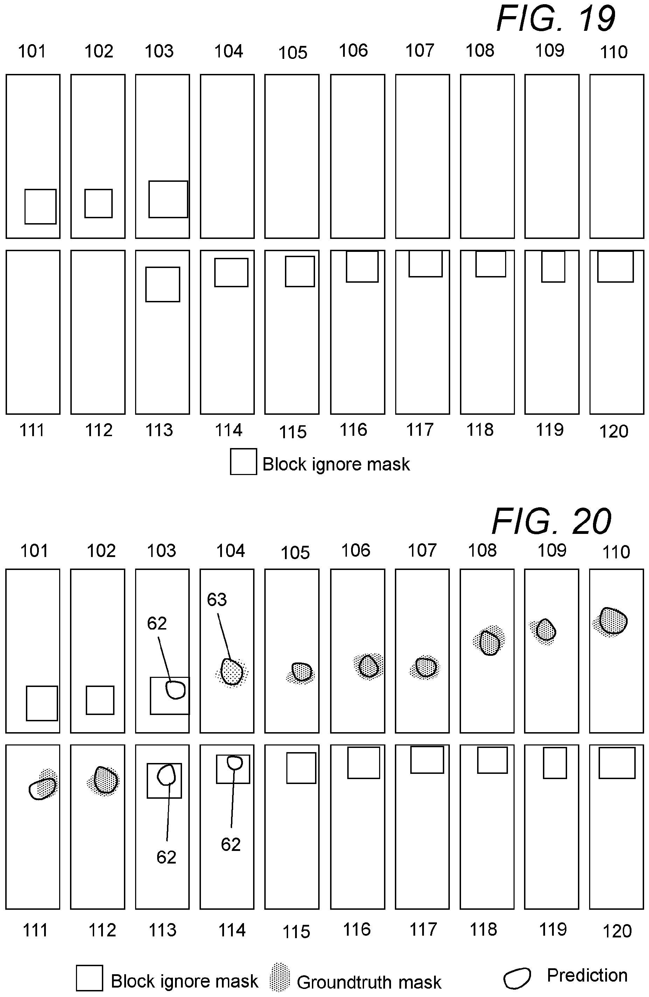

In a pre-processing stage, all block ignore masks which overlap with a groundtruth mask are removed. Figure 19 illustrates how the pre-processing stage changes the data shown in Figure 16. The block ignore masks which overlap with the groundtruth masks 64 shown in Figure 7 have been removed, leaving only eleven block ignore masks.

Figure 20 superimposes the block ignore masks of Figure 19 on the groundtruth masks 64 and predictions 62, 63 of Figure 8.

The training engine follows the process of Table 1, using the block ignore masks of Figure 20.

For each pixel which has an ignore flag (i.e. scenarios #3 and #4 in which the pixel coincides with a block ignore mask) the training engine 3 ignores the prediction value for that pixel so that it is not used to train the machine learning model 2. All pixels within the block ignore masks in frames 101, 102 and 115-120 correspond with scenario #3 or scenario #4. Scenarios #7 and #8 will not occur due to the pre-processing stage mentioned above.

For each pixel which has no ignore flag (i.e. scenarios #1, #2, #5 and #6) a loss value is determined based on the prediction value and groundtruth annotation for that pixel and the machine learning model 2 is trained on a basis of the loss value. All pixels within the groundtruth masks of Figure 20 correspond with either scenario #5 or scenario #6.

Note that there are three regions 62 with high prediction values which do not overlap with groundtruth masks 64. In the previous method, which generates peripheral ignore masks 75, 80, 81 on the basis of the groundtruth masks 64, the pixels in the core of these regions 62 correspond with scenario #2 and are used to train the machine learning model 2 as a false positive. In the case of Figure 20, all of the pixels in these regions 62 fall within a bulk ignore mask, so they correspond with scenario #4 and are ignored.

During the training process illustrated in Figure 20, the machine learning model 2 is forced to learn the dents from images 104-112 and the bulk ignore masks cause the other images to be left undecided. This avoids the problems of poor visibility of the dent as described above.

The peripheral ignore masks 75, 80, 81 of Figures 11-14 provide a solution to the problem of ambiguity in the exact borders of the dents in the images 104-112; whereas the larger bulk ignore masks in Figure 20 provide a solution to the problems associated with training the machine learning model 2 based on the images 101-103 and 115-120 where the dent is ambiguous or hardly visible.

Optionally these two solutions may be used together in the same training process: i.e. the peripheral ignore masks 75, 80, 81 of Figures 11-14 may be created in addition to the bulk ignore masks of Figure 20, and applied to the frames 104-112 with groundtruth masks.

In the examples above, a single prediction value is determined per pixel by the machine learning model 2. This prediction value provides an indication of a probability of the pixel corresponding with an image feature, such as a dent. In other embodiments of the invention, the machine learning model 2 may output multiple prediction values per pixel, each prediction value associated with a different defect class such as a dent or a scratch. These multiple prediction values can then be used to classify each pixel as a dent and/or a scratch for example.

Where there are more than two defect classes, then the annotator may also have the ability to generate groundtruth masks associated with each defect class. Ignore masks for these multiple defect classes may also be generated and used as described above.

In other embodiments of the invention, the machine learning model 2 may output a single prediction value per pixel, and the single prediction value is used to identify the pixel as background, unclear, or a defect: for instance 0-30% =background class; 30%-70%=intermediate class; 70%-100%=dent class.

After the machine learning model 2 has been trained to identify image features by the process above, it can then be used to segment an image in an inference phase. **In** the inference phase, each pixel is classified on the basis of a prediction value output by the trained machine learning model 2.

Where the word 'or' appears this is to be construed to mean 'and/or' such that items referred to are not necessarily mutually exclusive and may be used in any appropriate combination.

Although the invention has been described above with reference to one or more preferred embodiments, it will be appreciated that various changes or modifications may be made without departing from the scope of the invention as defined in the appended claims.

**Claims**

1. A method of training a machine learning model to identify image features, the method comprising:

    a. providing training image data, the training image data comprising a plurality of pixels;
    b. providing a groundtruth mask which provides an indication that a region of the training image data contains an image feature;
    c. creating one or more ignore masks on a basis of the groundtruth mask, each ignore mask comprising a loop at a periphery of the groundtruth mask, the loop having an inner edge and an outer edge;
    d. for each pixel, receiving a prediction value from the machine learning model, wherein each prediction value provides an indication of a probability of the pixel corresponding with an image feature;
    e. for each pixel which coincides with the groundtruth mask and does not coincide with an ignore mask, determining a loss value based on the prediction value for that pixel and training the machine learning model on a basis of the loss value; and
    f. for each pixel which lies between the inner and outer edges of an ignore mask, ignoring the prediction value for that pixel so that it is not used to train the machine learning model.

2. A method according to claim 1, wherein the periphery of the groundtruth mask comprises a margin area extending to an edge; and all or part of an ignore mask is inside the edge so that it overlaps with the margin area of the ground truth mask.

3. A method according to any preceding claim, wherein the periphery of the groundtruth mask comprises a margin area extending to an edge of the groundtruth mask; and all or part of an ignore mask is outside the edge of the groundtruth mask so that it does not overlap with the ground truth mask.

4. A method according to claim 1, wherein the periphery of the groundtruth mask comprises a margin area extending to an edge of the groundtruth mask; a first part of an ignore mask is inside the edge of the groundtruth mask so that it overlaps with the margin area; and a second part of the ignore mask is outside the edge of the groundtruth mask so that it does not overlap with the ground truth mask, and optionally wherein the ignore mask is created on a basis of the groundtruth mask by dilation of a line following the edge of the groundtruth mask.

5. A method according to any preceding claim, wherein each ignore mask is created on a basis of the groundtruth mask by analysing the groundtruth mask by an automated edge detection process to detect an edge of the groundtruth mask; and creating the ignore mask so that it has the same shape as the edge of the groundtruth mask.

6. A method according to any preceding claim, wherein the periphery of the groundtruth mask comprises a margin area extending to an edge of the groundtruth mask; and the inner and outer edges of the ignore mask each have the same shape as the edge of the groundtruth mask.

7. A method according to any preceding claim, wherein for each ignore mask a radial distance between the inner and outer edges of the ignore mask does not vary around the ignore mask.

8. A method according to any preceding claim, further comprising assigning a groundtruth annotation to each pixel, wherein each groundtruth annotation relates to a respective one of the pixels and each groundtruth annotation indicates whether or not that the pixel corresponds with an image feature; and for each pixel which does not coincide with an ignore mask, a loss value is determined based on the prediction value and groundtruth annotation for that pixel, and optionally wherein the loss value is determined by the algorithm:

$$-y_k \ln p_k - (1 - y_k) \ln(1 - p_k).$$

wherein $y_k$ is the groundtruth annotation for that pixel; $p_k$ is the prediction value for that pixel, a pixel which corresponds with an image feature has a groundtruth annotation $y_k$ of 1, and a pixel which does not correspond with an image feature has a groundtruth annotation $y_k$ of 0.

9. A method according to any preceding claim, wherein the training image data comprises a series of images of an object which each contain the same feature viewed from a different viewing angle, optionally wherein the method further comprises generating the training image data by imaging the object from a series of different viewing angles, and further optionally wherein the object is imaged with light.

10. A method according to any preceding claim, wherein b. comprises displaying the training image data to a human annotator and receiving the groundtruth mask via inputs from the human annotator.

11. A method according to any preceding claim, wherein the image feature comprises a surface defect, optionally wherein the image feature comprises a surface defect of an aircraft, and further optionally wherein the image feature comprises a dent.

12. A computer system configured to train a machine learning model by the method of any preceding claim.

13. Computer software configured to train a machine learning model by the method of any of claims 1 to 11.

14. A computer system configured to identify an image feature, said computer system comprising a machine learning model trained according to the method of any of claims 1 to 11.

15. A computer-implemented method of identifying an image feature comprising using a machine learning model trained according to the method of any of claims 1 to 11 to identify an image feature.

1 — Memory

⬌

2 — Machine-learning model

⬌

3 — Training engine

⬌

4 — Input/Output

⬌

⬍

*FIG. 1*

*FIG. 2*

10

40

*FIG. 3*

a. Generate training image data

b. Generate groundtruth masks based on training image data

c. Edge detection and dilation to generate ignore masks

d. Receive prediction value for each pixel in training image data

Next training epoch

Determine loss value per pixel

Sum loss values per pixel to determine average loss value

Train machine-learning model based on average loss value

*FIG. 4*

FIG. 5

| 101 | 102 | 103 | 104 | 105 | 106 | 107 | 108 | 109 | 110 |

| 111 | 112 | 113 | 114 | 115 | 116 | 117 | 118 | 119 | 120 |

○ Dent clearly visible    ◌ Dent hardly visible    ◌ Ambiguous image of dent

Training Image — 42

Display device — 51

Annotation input device — 52

— 50

FIG. 6

*FIG. 7*

Groundtruth mask

*FIG. 8*

Groundtruth mask        Prediction

*FIG. 9*

*FIG. 10*

*FIG. 11*

*FIG. 12*

*FIG. 13*

*FIG. 14*

## FIG. 15

DMU — 23

20

Ignore mask generator — 24

Input device — 22

## FIG. 16

101 102 103 104 105 106 107 108 109 110

111 112 113 114 115 116 117 118 119 120

☐ Block ignore mask

# FIG. 17

10

30

# FIG. 18

20

DMU — 23

Automatic ignore mask generator — 32

LIDAR data — 31

20

*FIG. 19*

101  102  103  104  105  106  107  108  109  110

111  112  113  114  115  116  117  118  119  120

☐ Block ignore mask

*FIG. 20*

101  102  103  104  105  106  107  108  109  110

62

63

111  112  113  114  115  116  117  118  119  120

62    62

☐ Block ignore mask     ⬤ Groundtruth mask     ⬭ Prediction

Europäisches
Patentamt
European
Patent Office
Office européen
des brevets

# EUROPEAN SEARCH REPORT

**Application Number**

EP 25 16 5153

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/383045 A1 (SAKHI OMID BONAKDAR [CA] ET AL) 1 December 2022 (2022-12-01) <br> * figure 1 * <br> * figure 3 * <br> * figures 4A-4C * <br> * figure 5 * <br> * figure 6 * | 1-15 | INV. <br> G06V10/44 <br> G06V10/764 <br> G06V10/774 |
| E | EP 4 564 312 A1 (AIRBUS SAS [FR]) 4 June 2025 (2025-06-04) <br> * the whole document * | 1-15 | |
| A | US 2023/394801 A1 (DOSHI ANUJ [US] ET AL) 7 December 2023 (2023-12-07) <br> * figures 2A-2F * <br> * figure 3 * | 1-15 | |
| A | CUI LISHA ET AL: "SDDNet: A Fast and Accurate Network for Surface Defect Detection", IEEE TRANSACTIONS ON INSTRUMENTATION AND MEASUREMENT, IEEE, USA, vol. 70, 11 February 2021 (2021-02-11), pages 1-13, XP011837875, ISSN: 0018-9456, DOI: 10.1109/TIM.2021.3056744 [retrieved on 2021-02-12] * the whole document * | 1-15 | **TECHNICAL FIELDS SEARCHED (IPC)** <br><br> G06V |

The present search report has been drawn up for all claims

| Place of search | Date of completion of the search | Examiner |
|---|---|---|
| The Hague | 6 June 2025 | Martinière, Anthony |

EPO FORM 1503 03.82 (P04C01)

## ANNEX TO THE EUROPEAN SEARCH REPORT
## ON EUROPEAN PATENT APPLICATION NO.

EP 25 16 5153

This annex lists the patent family members relating to the patent documents cited in the above-mentioned European search report.
The members are as contained in the European Patent Office EDP file on
The European Patent Office is in no way liable for these particulars which are merely given for the purpose of information.

06-06-2025

| Patent document cited in search report | | Publication date | Patent family member(s) | | Publication date |
|---|---|---|---|---|---|
| US 2022383045 | A1 | 01-12-2022 | NONE | | |
| EP 4564312 | A1 | 04-06-2025 | CN | 120088592 A | 03-06-2025 |
| | | | EP | 4564312 A1 | 04-06-2025 |
| | | | US | 2025182508 A1 | 05-06-2025 |
| US 2023394801 | A1 | 07-12-2023 | EP | 4533413 A1 | 09-04-2025 |
| | | | IL | 314809 A | 01-10-2024 |
| | | | TW | 202401371 A | 01-01-2024 |
| | | | US | 11727672 B1 | 15-08-2023 |
| | | | US | 2023394801 A1 | 07-12-2023 |
| | | | WO | 2023230408 A1 | 30-11-2023 |

EPO FORM P0459

For more details about this annex : see Official Journal of the European Patent Office, No. 12/82